# EUROPÄISCHE PATENTANMELDUNG

(11) **EP 4 241 983 A1**
(43) Veröffentlichungstag der Anmeldung: **13.09.2023**
(21) Anmeldenummer: 23160396.0
(22) Anmeldetag: 07.03.2023
(51) Int. Cl.: B32B 18/00, C04B 35/628, C04B 37/00, C04B 37/02, B32B 9/00, B32B 15/04, B32B 15/18, B32B 15/20, B32B 27/06, B32B 27/32

(54) **MEHRLAGIGER WERKSTOFFVERBUND, BAUTEIL UMFASSEND DEN MEHRLA-GIGEN WERKSTOFFVERBUND, VERFAHREN ZU DEREN HERSTELLUNG UND DEREN VERWENDUNG**

(30) Priorität: 11.03.2022 DE 102022202475
(71) Anmelder: Fraunhofer-Gesellschaft zur Förderung der angewandten Forschung e.V., 80686 München (DE)
(72) Erfinder: RAETHER, Friedrich, 95448 Bayreuth (DE); SCHMIDT, Jens, 95448 Bayreuth (DE); ECKARDT, Christian, 95448 Bayreuth (DE)
(74) Vertreter: Pfenning, Meinig & Partner mbB

(57) **Zusammenfassung**

Die vorliegende Erfindung betrifft einen mehrlagigen Werkstoffverbund umfassend keramische Lagen und zwischen den keramischen Lagen angeordnete anorganische Gleitschichtlagen, wobei die keramischen Lagen jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen. Ferner betrifft die vorliegende Erfindung auch ein Bauteil umfassend mindestens einen mehrlagigen Werkstoffverbund. Die vorliegende Erfindung betrifft im Weiteren auch ein Verfahren zur Herstellung des mehrlagigen Werkstoffverbundes, ein Verfahren zur Herstellung des Bauteils sowie die Verwendung des mehrlagigen Werkstoffverbunds und des Bauteils.

## Beschreibung

Die vorliegende Erfindung betrifft einen mehrlagigen Werkstoffverbund umfassend keramische Lagen und zwischen den keramischen Lagen angeordnete anorganische Gleitschichtlagen, wobei die keramischen Lagen jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen. Ferner betrifft die vorliegende Erfindung auch ein Bauteil umfassend mindestens einen mehrlagigen Werkstoffverbund. Die vorliegende Erfindung betrifft im Weiteren auch ein Verfahren zur Herstellung des mehrlagigen Werkstoffverbundes, ein Verfahren zur Herstellung des Bauteils sowie die Verwendung des mehrlagigen Werkstoffverbunds und des Bauteils.

Beim Betrieb und Rückbau von Kraftwerken fallen radioaktive Stoffe wie z.B. abgebrannte Brennelemente an, die sicher verpackt, transportiert und endgelagert werden müssen. Leicht radioaktive Stoffe fallen zudem auch in der Nuklearmedizin an. Für die Entsorgung der Stoffe werden metallische, meist zylindrische Behälter eingesetzt, die massiv und tonnenschwer sind. Sie bestehen aus einem inneren Behälterkörper, der die radioaktiven Abfälle einschließt und die Strahlung abschirmt und einer äußeren Hülle. Die Behälter unterliegen der behördlichen Zulassung. Für eine Endlagerung werden hohe Anforderungen an die Behälter gestellt, da über sehr lange Zeiträume kein Schaden für Mensch und Umwelt ausgehen darf. Ein Austritt von Strahlung und Gasen muss zuverlässig verhindert werden. Die Behälter müssen dauerhaft dicht, mechanisch stabil und korrosionsfest sein. Für die Endlagerung von radioaktiven Abfällen kommen Wirtsgesteine aus Ton, Salz und Granit in Frage. Der konventionelle Gusseisen- oder Gussstahlbehälter wird durch umgebende wässrige Lösungen allmählich korrodiert und die Gefahr einer radioaktiven Leckage nimmt mit der Zeit zu. Die Behälter sind außerdem mechanischen Belastungen durch tektonische Bewegungen in der Erdkruste ausgesetzt. Diese führen zu permanenten Spannungen oder - wie beispielsweise bei Erdbeben - zu Schockbelastung. Zudem muss die Sicherheit auch gewährleistet werden, wenn es während des Transports zum Herabstürzen des Behälters von einem Fahrzeug kommt. Schließlich können thermische Belastungen durch die freigesetzte Strahlungsenergie auftreten.

Der Begriff "Castor" wird häufig umgangssprachlich für Transport- und Lagerbehälter verwendet, in denen abgebrannte Brennelemente verpackt und sicher verschlossen werden können. Solche Behälter werden von verschiedenen Unternehmen hergestellt. Behälter mit der Bezeichnung "Castor" ("cask for storage and transport of radioactive material" = Behälter für Lagerung und Transport radioaktiven Materials) werden von dem deutschen Unternehmen GNS gefertigt. Alle Castoren sind durch ein Doppeldeckeldichtungssystem geschützt, das höchste Sicherheitsstandards erfüllt. Die Wandstärke von etwa 40 Zentimetern sorgt dafür, dass von den abgebrannten Brennelementen in den Castoren keine Gefahr für die Umgebung ausgeht. Für die Transporte von Obrigheim nach Neckarwestheim wurde beispielsweise ein Castor-Behälter vom Typ 440/84 mvK verwendet. Der Behälter ist rund 4 Meter lang und hat einen Durchmesser von etwa 2,5 Metern. Er kann jeweils maximal 24 Brennelemente aufnehmen. Ein Behälter wiegt im unbeladenen Zustand 96 Tonnen, beladen 107 Tonnen.

Eine Übersicht der derzeit eingesetzten Materialien für eine möglichst hohe Neutronenabsorption mit Vor- und Nachteilen ist in Fu et al. (X. Fu et al.: "The Advancement of Neutron Shielding Materials for the storage of spent Nuclear Fuel", Hindawi, Science and Technology of Nuclear Installations, Volume 2021, Article ID 5541047, https://doi.org/10.1155/2021/5541047) beschrieben. Für eine hohe Neutronenabsorption werden Metallisotope mit einem großen Wirkungsquerschnitt wie beispielsweise Bor verwendet. Hohe Wasserstoffanteile in Polymermatrices führen zu einer effizienten Umwandlung der schnellen Neutronen in thermische Neutronen. Es kommen folgende Materialien zum Einsatz, die möglichst leicht, hochtemperaturbeständig, fest, dicht und korrosionsfest sein sollten:
- rostfreie Stähle mit 1-2% Bor-Anteil
- mit Mikro- und Nanopartikeln aus Borcarbid verstärkte Aluminium-Komposite mit und ohne Carbon Nano Tubes (CNT)
- amorphe Fe-Legierungen mit hohem Boranteil
- Aluminium mit Bor-Dotierung
- Cadmium und Gadolinium, Lithiumfluorid
- leichte, funktionale Polymerkomposite: Verstärkung durch Nanopartikel, Fasern, Whisker, Partikel; HDPE, EP, Phenole, PI, EPDM mit borhaltigen Partikeln als Absorber (BN, B₂O₃, Colemanite), Verbund z.T. bis 300 °C hitzebeständig, hier insbesondere PI als HT-Matrix geeignet
- B₄C mit Carbonfaserverstärkung als Sandwich: gute thermische und mechanische Stabilität sowie Neutronenabsorption. Carbonfasern günstig auf Grund guter Zugfestigkeit und Wärmeleitfähigkeit
- Beton: guter Protonen- und Neutronenschutz, auch Modifikation als Hybrid-Komposite Glas-Polymer-Beton, auch B₄C oder Magnetit als Zusätze untersucht
- Schwermetalle wie Bleioxid, Bismut, Barium als Silicatgläser
- Paraffin in Kombination mit Neutronenabsorbern wie Borverbindungen

Von der Firma ASEA wird die Behälterherstellung aus reinem und hochdichtem Aluminiumoxid (theor. Dichte 99,5 %) mittels eines HIP-Prozesses vorgeschlagen. Es werden Behältergrößen mit einem Durchmesser bis 0,5 m und einer Länge von 3 m angestrebt. Durch Fügetechnik werden Deckel und Behälter, nach dem Füllen mit radioaktivem Material (Brennstäbe) nahtlos verschweißt. Von der französischen Firma Andra wird ein Konzept für keramische Behälter verfolgt, bei dem das Material bis zu Temperaturen von 700 °C eingesetzt werden kann. Als hochtemperaturbeständiges Material mit isolierender Wirkung wird Geopolymer (Aluminiumsilikate) verwendet (Andra, "La scellement par micro-ondes" Le journal de l'Andra 24, p. 10, 2016).

Von Fu (Xuelon Fu et al.: "Effect of different lay-ups on the mircrostructure, mechanical properties and neutron transmission of neutron shielding fibre metal laminates", J. of. Nuc, Mat. 475, (2016), 227-236) wird die Herstellung und der Test von Metall-Faser-Kompositen (3-9 Lagen) berichtet. Die Plattenverbunde bestehen aus lagenfömig aufgebauten Aluminium-Carbonfaser-Kompositen. Die Prepreg-Carbonlagen sind mit einer Polyimidmatrix getränkt und enthalten B₄C-Partikel. Es werden Metall-Außenlagen mit einer Dicke von 0,5 mm, polymere Zwischenschichten mit Partikeln von 0,2 mm und Prepreg-Carbon-Lagen von 0,125 mm verwendet. Die Verarbeitung des Schichtverbunds zu Platten erfolgt mittels Heißpressen. Die Platten erreichen Festigkeiten von bis zu 448 MPa und sind bis ca. 300 °C temperaturbeständig. Mit zunehmender Plattendicke/Lagenanzahl wurde eine verbesserte Neutronenabsorption festgestellt. Die verbesserte Neutronenabsorption kann auf den erhöhten Wasserstoffanteil (Polyimidmatrix wandelt schnelle in thermische Neutronen um) und den hohen Einfangquerschnitt des B₄C fürthermische Neutronen zurückgeführt werden. Die Carbonfasern spielen eine positive Rolle beim Neutronentransport, indem vermutlich durch die graphitischen Kohlenstoffanteile in den Fasern die elastische Streuung der Neutronen gesteigert wird. In mechanischen Tests zeigen die Verbunde ein quasiduktiles Bruchverhalten und versagen durch Faser-Pull-out und Matrixablösungen. Grundsätzlich ist jedoch bei Verwendung von organischen Polymeren, durch die Wechselwirkung mit radioaktiver Strahlung von einer Langzeitversprödung auszugehen, die die mechanischen Eigenschaften beeinträchtigt (S. Egusa et al.: "Effects of Neutron Irradiation on Polymer Matrix Composites at 5 K and at Room Temperature", J. of Nuc. Mat. 148 (1987) 53-60). Durch Spaltung der Polymerketten und Radikalbildung kommt es insbesondere bei Neutronenanregung mit höheren Dosen zu Festigkeitsverlusten.

Bisher ist kein Behälterkonzept bekannt, dass mechanische Stabilität, Schadenstoleranz, Strahlungs-, Korrosions- und Temperaturbeständigkeit miteinander kombiniert.

Ein ineinander verschachtelter Abschirmbehälter ist in der WO 2013/060326 A1 als Behältersystem für radioaktiven Abfälle oder Giftmüll beschrieben. Das Behältersystem ist bis zu 150 °C hitze- und formbeständig. Er dient zur Zwischen- und Endlagerung. Zwischen dem äußeren und inneren Behälter befindet sich ein Füllstoff. Im inneren Behälter, der metallisch ist, wird der radioaktive Abfall isoliert. Zwischen den Behältern befindet sich ein Füllstoff aus Harz, Bernstein oder Kunststoff der den Behälter vor Korrosion schützen soll. Der Füllstoff wird eingegossen und erhärtet. Der äußere Behälter umfasst Epoxidharz und/oder glasfaserverstärkten Kunststoff (GFK). Der Äußere Behälter kann vom Inneren vor der Endlagerung gelöst und wiederverwendet werden. In einem eisenhaltigen Innenzylinder sind die radioaktiven Stoffe eingeschlossen. Die äußere Wand besteht aus vier Schichten aus keramischen Materialien wie Siliziumoxid, Flugasche, Baryt, Phosphaten etc., welche die mechanischen Eigenschaften des Behälters verbessern, aber auch vor Korrosion schützen.

Die WO 98/59346 A1 "Verfahren zur Herstellung eines Behälters sowie ein Behälter selbst" beschreibt einen zweiteiligen Behälter, bei dem zwischen erstem und zweitem Behälter ein Ringspalt eingestellt wird, der mit Schwerbeton ausgefüllt wird.

Ein Konzept zur Armierung von Metallrohren ist in der DE 10 2006 038 713 A1 "Druckfester fluidbeaufschlagter Körper" beschrieben. Das Konzept sieht die Armierung eines Stahlrohrs oder Behälters durch einen kriechbeständigen Faserkeramikmantel vor.

In der WO 2013/087803 A1 "Lastragende Armierung von innendruckbeaufschlagten Hohlkörpern" ist eine feste, anhaftende Zwischenschicht zwischen einem metallischen Grundkörper und der Innenseite einer Faserarmierung vorgesehen. Diese besteht aus einem organischen, organisch-anorganischen oder anorganischen Material, wie z.B. Keramik.

Ausgehend hiervon war es die Aufgabe der vorliegenden Erfindung einen Werkstoffverbund bereitzustellen, der einen guten mechanischen und chemischen Schutz bietet, beispielsweise als Bestandteil eines Bauteils in Form eines Behälters oder Behälterelements.

Diese Aufgabe wird bezüglich eines Werkstoffverbunds mit den Merkmalen des Patentanspruchs 1, bezüglich eines Bauteils mit den Merkmalen des Patentanspruchs 6, bezüglich eines Verfahrens zur Herstellung eines Werkstoffverbunds mit den Merkmalen des Patentanspruchs 10 und bezüglich eines Verfahrens zur Herstellung eines Bauteils mit den Merkmalen des Patentanspruchs 14 gelöst. In Patentanspruch 15 werden Verwendungsmöglichkeiten des Werkstoffverbunds sowie des Bauteils angegeben. Die jeweilig abhängigen Patentansprüche stellen dabei vorteilhafte Weiterbildungen dar.

Erfindungsgemäß wird somit ein mehrlagiger Werkstoffverbund bereitgestellt, welcher keramische Lagen und zwischen den keramischen Lagen angeordnete anorganische Gleitschichtlagen umfasst. Die keramischen Lagen umfassen jeweils eine keramische Matrix sowie in die keramische Matrix eingebettete keramische Fasern, die (zumindest teilweise) mit mindestens einer anorganischen Gleitbeschichtung beschichtet sind. Zudem weisen die keramischen Lagen jeweils eine Porosität von maximal 30 Vol.-% auf.

Der erfindungsgemäße Werkstoffverbund weist einen mehrlagigen Aufbau auf, der eine Mehrzahl an keramischen Lagen und eine Mehrzahl an anorganischen Gleitschichtlagen umfasst. Optional kann der mehrlagige Aufbau zusätzlich auch eine Mehrzahl an Metall-Lagen und/oder eine Mehrzahl an Polymer-Lagen umfassen. Die anorganischen Gleitschichtlagen stellen Zwischenlagen dar, die zwischen den keramischen Lagen angeordnet sind. Zwischen jeweils zwei der keramischen Lagen können entweder eine oder mehrere der anorganischen Gleitschichtlagen angeordnet sein. Beispielsweise kann der mehrlagige Werkstoffverbund drei keramische Lagen und zwei anorganische Gleitschichtlagen umfassen, wobei zwischen jeweils zwei der drei keramischen Lagen eine der anorganischen Gleitschichtlagen angeordnet ist.

Die keramischen Lagen umfassen jeweils eine keramische Matrix sowie in die keramische Matrix eingebettete keramische Fasern. Bei den keramischen Lagen handelt es sich somit um CMC-Lagen, d.h. Lagen aus einem keramischen Faserverbundwerkstoff. Durch die keramischen Verstärkungsfasern weisen die keramischen Lagen eine hohe mechanische Stabilität auf. Zudem sind die keramischen Lagen chemisch inert und somit nicht anfällig für Korrosion. Ferner wird durch die begrenzte Porosität der keramischen Lagen von maximal 30 Vol.-% eine Diffusion von korrosiven Spezies durch die keramischen Lagen unterbunden oder zumindest erschwert. Die keramischen Lagen sorgen somit für eine gute mechanische und chemische Schutzwirkung des Werkstoffverbunds.

Vorzugsweise weisen die keramischen Lagen jeweils eine Porosität von maximal 20 Vol.-%, besonders bevorzugt von maximal 10 Vol.-%, ganz besonders bevorzugt von maximal 5 Vol.-%, insbesondere von maximal 3 Vol.-%, beispielsweise von maximal 1 Vol.-%, auf. Durch eine geringere Porosität der keramischen Lagen kann eine Diffusion von korrosiven Spezies durch die keramischen Lagen noch besser verhindert bzw. erschwert werden.

Die Porosität der keramischen Lagen kann beispielsweise bestimmt werden mittels Gefügebildern von Anschliffen unter dem Lichtmikroskop oder mittels Bildauswertung von hochauflösenden Röntgenbildern. Alternativ kann die Porosität der keramischen Lagen beispielsweise auch mittels Quecksilberporosimetrie oder nach dem Prinzip von Archimedes bestimmt werden.

Zwischen der keramischen Matrix und den keramischen Fasern ist mindestens eine Zwischenschicht (Interphase) angeordnet, d.h. die keramischen Fasern sind (zumindest teilweise) mit mindestens einer Beschichtung beschichtet. Bei dieser Beschichtung handelt es sich um mindestens eine anorganische Gleitbeschichtung. Diese verhindert ein zu starkes Anhaften bzw. eine zu starke Anbindung der keramischen Fasern an der keramischen Matrix und ermöglicht in der Folge bei hohen mechanischen Lasten einen Faser-Pullout und damit eine Energieabsorption. Das Zusammenspiel zwischen Verstärkungsfasern, Gleitbeschichtung und Matrix sorgt so für eine hohe Bruchdehnung der keramischen Lagen, wodurch das Risiko des Auftretens durch mechanische Belastung verursachter lokaler Risse, insbesondere größerer Risse, in den keramischen Schichten gesenkt und insbesondere ein katastrophales Versagen (Sprödbruch) der keramischen Schichten verhindert wird. Auf diese Weise wird die mechanische Schutzwirkung des Werkstoffverbunds noch weiter erhöht.

Zwischen den keramischen Lagen des Werkstoffverbunds sind anorganische Gleitschichtlagen angeordnet. Auch diese können jeweils als Zwischenschicht (Interphase) bezeichnet werden. Durch die anorganischen Gleitschichtlagen wird ein zu starkes Anhaften bzw. eine zu starke Anbindung der keramischen Lagen aneinander (oder an anderen Lagen) verhindert. Dies führt dazu, dass vereinzelte lokale Risse, z.B. Mikrorisse, in einer der keramischen Lagen, die durch sehr starke mechanische Belastung des Werkstoffverbunds entstehen können, nicht durch die weiteren Lagen des Werkstoffverbunds fortgesetzt werden. Auf diese Weise wird auch verhindert, dass korrosive Spezies, welche durch die einzelnen lokalen Risse gelangen könnten, durch den gesamten Werkstoffverbund gelangen. So wird die mechanische und chemische Schutzwirkung des Werkstoffverbunds noch weiter erhöht.

Der erfindungsgemäße Werkstoffverbund weist eine hohe mechanische und chemische Schutzwirkung auf, wobei jedoch auf schwere Materialien, wie beispielsweise schwere Metalle oder Beton verzichtet werden kann. Die Dichte von Faserkeramik liegt nur bei ca. 3-4 g/cm³, sodass die keramischen Lagen sehr leicht sind. Der erfindungsgemäße Werkstoffverbund eignet sich somit auch besonders als Bestandteil in bestimmten Bauteilen oder Bauteilelementen, wie z.B. Behältern oder Elementen davon, deren Inhalt vor äußeren mechanischen und chemischen Einflüssen geschützt werden soll. Solche Behälter können aufgrund des geringen Dichte und des geringen Gewichts der keramischen Lagen mit vergleichsweise geringem Gewicht erhalten werden, sodass sich deutliche Vorteile bei Handhabung, Beförderung und Lagerung ergeben.

Zum Beispiel kann der erfindungsgemäße Werkstoffverbund als Material eines Behälters für den Transport und die Endlagerung von radioaktiven Stoffen oder eines Element eines solchen Behälters, z.B. der Wandung, des Deckels oder der Bodenplatte, dienen. Die keramischen Lagen mit den keramischen Matrices und keramischen Fasern sind korrosionsfest und auch bei hohen Temperaturen (z.B. 500 bis 1000 °C) hochfest und kriechbeständig. Damit bleibt auch bei einer Temperaturerhöhung, bedingt durch die Entstehung thermischer Neutronen oder Lagerstättenveränderungen, die Festigkeit konstant.

Eine bevorzugte Ausführungsform des erfindungsgemäßen mehrlagigen Werkstoffverbunds ist dadurch gekennzeichnet, dass die keramische Matrix und/oder die keramischen Fasern mindestens eine Oxidkeramik enthält/enthalten oder daraus besteht/bestehen. Die mindestens eine Oxidkeramik ist vorzugsweise ausgewählt aus der Gruppe bestehend aus Al₂O₃-Keramiken, Mullit-Keramiken, ZrO₂-Keramiken sowie Mischungen und Kombinationen hiervon. Diese Keramiken ermöglichen gleichzeitig eine hohe mechanische Stabilität, eine geringe Porosität und eine geringe Dichte der keramischen Lagen.

Eine weitere bevorzugte Ausführungsform des erfindungsgemäßen mehrlagigen Werkstoffverbunds zeichnet sich dadurch aus, dass die anorganischen Gleitschichtlagen und/oder die mindestens eine anorganische Gleitbeschichtung mindestens ein Material enthält/enthalten oder daraus besteht/bestehen, welches innerhalb seiner Kristallstruktur eine Schichtstruktur aufweist, bei welcher Bindungskräfte zwischen den Atomen in einer Schichtebene größer sind als Bindungskräfte zwischen den Schichtebenen. Das mindestens eine Material ist hierbei vorzugsweise ausgewählt aus der Gruppe bestehend aus Schichtsilicaten, Bornitrid, Graphit, sowie Mischungen und Kombinationen hiervon. Dadurch, dass die Bindungskräfte zwischen den Atomen in einer Schichtebene größer sind als die Bindungskräfte zwischen den Schichtebenen, ergibt sich zwischen den einzelnen Schichten eine vergleichsweise geringe Anhaftung/Anbindung, was zu einer Gleitwirkung entlang der Schichten führt. So kann auf einfache Weise eine anorganische Gleitschichtlage bzw. anorganische Gleitbeschichtung realisiert werden.

Eine weitere bevorzugte Ausführungsform des erfindungsgemäßen mehrlagigen Werkstoffverbunds ist dadurch gekennzeichnet, dass die anorganischen Gleitschichtlagen und/oder die mindestens eine anorganische Gleitbeschichtung mindestens ein Material enthält/enthalten oder daraus besteht/bestehen, welches ausgewählt ist aus der Gruppe bestehend aus Schichtsilicaten, Bornitrid, Graphit, sowie Mischungen und Kombinationen hiervon.

Gemäß einer weiteren bevorzugten Ausführungsform des erfindungsgemäßen mehrlagigen Werkstoffverbunds ist/sind zwischen jeweils zwei der keramischen Lagen immer eine oder zwei der Gleitschichtlagen angeordnet.

Eine weitere bevorzugte Ausführungsform des erfindungsgemäßen mehrlagigen Werkstoffverbunds ist dadurch gekennzeichnet, dass der mehrlagige Werkstoffverbund zusätzlich Metall-Lagen umfasst, wobei vorzugsweise
- die Metall-Lagen jeweils mindestens ein Material enthalten oder daraus bestehen, welches ausgewählt ist aus der Gruppe bestehend aus Titan, titan-Legierungen, Aluminium, Aluminium-Legierungen, Kupfer, Eisen-Legierungen, Nickel-Legierungen, Cobalt-Legierungen, sowie Mischungen, Legierungen und Kombinationen hiervon, und/oder
- zwischen jeweils zwei der keramischen Lagen immer eine der Metall-Lagen angeordnet ist, wobei besonders bevorzugt zwischen jeweils einer der keramischen Lagen und einer der Metall-Lagen immer eine der Gleitschichtlagen ist, und/oder
- die Metall-Lagen jeweils eine Dicke von 0,1 mm bis 1 mm, bevorzugt von 0,1 mm bis 0,5 mm, aufweisen.

Die Metall-Lagen sind dicht und duktil, wodurch in Kombination mit den keramischen Lagen und den Gleitschichtlagen die mechanische und chemische Stabilität des Werkstoffverbunds noch weiter erhöht werden kann. Hierbei ermöglichen die Metall-Lagen eine Stabilisierung der keramischen Lagen durch plastische Verformung bei mechanischen Belastungen und verhindern, dass sich durchgehende Risse im Werkstoffverbund ausbilden können. Zudem weisen die Metall-Lagen eine hohe Neutronen-Absorption auf, sodass durch die Metall-Lagen die Neutronenabsorption des Werkstoffverbunds erhöht werden kann. Die Verwendung eines Materials für die Metall-Lagen ausgewählt aus der Gruppe bestehend aus Titan, Titan-Legierungen, Aluminium, Aluminium-Legierungen, Kupfer, Eisen-Legierungen, Nickel-Legierungen, Cobalt-Legierungen, insbesondere Eisen-Nickel-Cobalt-Legierungen (z.B. Kovar), sowie Mischungen, Legierungen und Kombinationen hiervon ist vorteilhaft, da bei diesen Materialien die genannten Effekte besonders ausgeprägt sind und/oder diese Materialien eine geringe Dichte und/oder einen geringen thermischen Ausdehnungskoeffizienten aufweisen bzw. einen thermischen Ausdehnungskoeffizienten, der ähnlich dem thermischen Ausdehnungskoeffizienten der keramischen Lagen ist.

Vorzugsweise enthalten die Metall-Lagen mindestens ein Material oder bestehen daraus, wobei
- das mindestens eine Material (der Metall-Lagen) eine Dichte von maximal 10,0 g/cm³, vorzugsweise von maximal 5,0 g/cm³, aufweist, und/oder
- das mindestens eine Material (der Metall-Lagen) einen Wärmeausdehnungskoeffizienten von maximal 15 · 10⁻⁶ K⁻¹, bevorzugt von maximal 10 · 10⁻⁶ K⁻¹, aufweist, und/oder
- der Unterschied zwischen dem thermischen Ausdehnungskoeffizient des mindestens einen Materials der Metall-Lagen und dem thermischen Ausdehnungskoeffizienten des bzw. eines Materials der keramischen Lagen maximal 10 · 10⁻⁶ K⁻¹, vorzugsweise maximal 5 · 10⁻⁶ K⁻¹, besonders bevorzugt maximal 2 · 10⁻⁶ K⁻¹, beträgt.

Aus einer geringen Dichte der Metall-Lagen resultiert der Vorteil eines geringeren Gewichtes des Werkstoffverbunds. Dadurch, dass die Metall-Lagen einen geringen thermischen Ausdehnungskoeffizienten aufweisen bzw. einen thermischen Ausdehnungskoeffizienten aufweisen, der ähnlich dem thermischen Ausdehnungskoeffizienten der keramischen Lagen ist, können thermische Spannungen, die zu Rissbildungen führen können, vermieden oder verringert werden.

Die Dichte des mindestens einen Materials der Metall-Lagen kann beispielsweise bestimmt werden mittels Dichtebestimmung nach Archimedes, z.B. mittels DIN 66137-2:2019-03 und/oder DIN 66137-3:2019-03. Der Wärmeausdehnungskoeffizient des mindestens einen Materials der Metall-Lagen kann beispielsweise bestimmt werden mittels Dilatometrie, z.B. mittels ASTM E 228:2017.

Besonders bevorzugt enthalten die Metall-Lagen mindestens ein Material oder bestehend daraus, welches ausgewählt ist aus der Gruppe bestehend aus Titan, Titanlegierungen, Eisen-Nickel-Cobalt-Legierungen (z.B. Kovar), sowie Mischungen, Legierungen und Kombinationen hiervon.

Ganz besonders bevorzugt enthalten die Metall-Lagen mindestens ein Material oder bestehend daraus, welches ausgewählt ist aus der Gruppe bestehend aus Titan und Titanlegierungen. Diese Materialien sind korrosionsfest, weisen eine geringe Dichte auf und weisen zudem einen thermischen Ausdehnungskoeffizienten auf, welcher ähnlich dem thermischen Ausdehnungskoeffizienten des Materials der keramischen Lagen sein kann. Titan ist mit einer Dichte von 4,5 g/cm³ sehr leicht, korrosionsfest und weist eine zu Oxidkeramiken kompatible geringe thermische Ausdehnung von 8,6 · 10⁻⁶ K⁻¹ auf.

Durch eine geringe Dicke der Metall-Lagen von 0,1 mm bis 1 mm, bevorzugt von 0,1 mm bis 0,5 mm, kann eine höhere Anzahl an Lagen verwendet und gleichzeitig das Gewicht des Werkstoffverbunds vergleichsweise niedrig gehalten werden.

Eine weitere bevorzugte Ausführungsform des erfindungsgemäßen mehrlagigen Werkstoffverbunds zeichnet sich dadurch aus, dass der mehrlagige Werkstoffverbund zusätzlich Polymer-Lagen umfasst, wobei vorzugsweise
- die Polymer-Lagen jeweils mindestens ein Polymer enthalten oder daraus bestehen, welches ausgewählt ist aus der Gruppe bestehend aus Polyimiden (PI), High-Density-Polyethylen (HDPE), sowie Mischungen und Kombinationen hiervon, und/oder,
- zwischen jeweils zwei der keramischen Lagen immer eine der Polymer-Lagen angeordnet ist, wobei besonders bevorzugt jeweils zwischen zwei der keramischen Lagen eine der Polymer-Lagen und eine oder zwei der Gleitschichtlagen angeordnet sind, wobei ganz besonders bevorzugt zwischen jeweils einer der keramischen Lagen und einer der Polymer-Lagen immer eine der Gleitschichtlagen angeordnet ist, und/oder
- die Polymer-Lagen Borcarbid-Partikel (B₄C-Partikel) enthalten, und/oder
- die Polymer-Lagen eine Dicke von 0,1 mm bis 5 mm, bevorzugt von 0,1 mm bis 1 mm, aufweisen.

Durch die Polymer-Lagen kann in Kombination mit den keramischen Lagen und den Gleitschichtlagen die mechanische und chemische Stabilität des Werkstoffverbunds noch weiter erhöht werden. Die Polymer-Lagen können Borcarbid-Partikel zur Neutronenabsorption enthalten. Auf diese Weise kann durch die Polymer-Lagen die Neutronenabsorption des Werkstoffverbunds erhöht werden.

Durch eine geringe Dicke der Polymer-Lagen von 0,1 mm bis 5 mm, bevorzugt von 0,1 mm bis 1 mm, kann eine höhere Anzahl an Lagen verwendet und gleichzeitig das Gewicht des Werkstoffverbunds vergleichsweise niedrig gehalten werden.

Gemäß einer weiteren bevorzugten Ausführungsform des erfindungsgemäßen Werkstoffverbunds umfasst der mehrlagige Werkstoffverbund mindestens drei, bevorzugt mindestens vier, besonders bevorzugt mindestens fünf, ganz besonders bevorzugt mindestens zehn, insbesondere mindestens 20, beispielsweise mindestens 50, der keramischen Lagen. Vorzugweise ist/sind hierbei immer zwischen jeweils zwei der keramischen Lagen eine oder zwei der Gleitschichtlagen angeordnet. Durch eine Erhöhung der Anzahl der Lagen kann die mechanische und chemische Schutzwirkung des Werkstoffverbunds noch weiter erhöht werden.

Vorzugsweise umfasst der erfindungsgemäße Werkstoffverbund mindestens drei der keramischen Lagen und mindestens zwei der Gleitschichtlagen, bevorzugt mindestens vier der keramischen Lagen und mindestens drei der Gleitschichtlagen, besonders bevorzugt mindestens fünf der keramischen Lagen und mindestens vier der Gleitschichtlagen, ganz besonders bevorzugt mindestens zehn der keramischen Lagen und mindestens neun der Gleitschichtlagen, insbesondere mindestens 20 der keramischen Lagen und mindestens 19 der Gleitschichtlagen, beispielsweise mindestens 50 der keramischen Lagen und mindestens 49 der Gleitschichtlagen. Durch eine Erhöhung der Anzahl der Lagen kann die mechanische und chemische Schutzwirkung des Werkstoffverbunds noch weiter erhöht werden.

Eine weitere bevorzugte Ausführungsform des erfindungsgemäßen Werkstoffverbunds ist dadurch gekennzeichnet, dass die keramischen Fasern in Form von Rovings, in Form von Bändern aus unidirektionalen Fasern und/oder in Form von Bändern mit textiler Struktur, z.B. Geweben, angeordnet sind, welche mit der mindestens einen anorganischen Gleitbeschichtung beschichtet sind. Hierbei können die einzelnen Fasern und/oder die die einzelnen Fasern enthaltenden Rovings bzw. Bänder mit der mindestens einen anorganischen Gleitbeschichtung beschichtet sein. Durch die Verwendung von Faser in Form von Rovings, in Form von Bändern aus unidirektionalen Fasern und/oder in Form von Bändern mit textiler Struktur, z.B. Geweben, kann die mechanische Stabilität der keramischen Lagen erhöht werden, wodurch der mechanische Schutz des Werkstoffverbunds weiter erhöht wird.

Weiterhin ist es bevorzugt, dass
- die keramischen Lagen eine Dicke von 0,1 mm bis 10 mm, bevorzugt von 0,1 mm bis 3 mm, aufweisen, und/oder
- die anorganischen Gleitschichtlagen eine Dicke von 0,1 mm bis 5 mm, bevorzugt von 0,1 mm bis 1 mm, aufweisen.

Durch eine solch geringe Dicke der Lagen kann eine höhere Anzahl an Lagen verwendet und gleichzeitig das Gewicht des Werkstoffverbunds vergleichsweise niedrig gehalten werden.

Die vorliegende Erfindung betrifft ferner ein Bauteil umfassend mindestens einen mehrlagigen Werkstoffverbund gemäß der vorliegenden Erfindung.

Aufgrund des mehrlagigen Werkstoffverbunds eignet sich das erfindungsgemäße Bauteil sehr zur Lagerung und/oder Beförderung von gefährlichen Substanzen. Insbesondere ist das erfindungsgemäße Bauteil sehr zur Lagerung radioaktiver Substanzen geeignet. Die keramischen Lagen mit ihrer keramischen Matrix und den keramischen Fasern bieten einen hohen mechanischen und chemischen Schutz, der durch die anorganischen Gleitschichtlagen sowie die mindestens eine anorganische Gleitbeschichtung noch deutlich wird. Durch die anorganische Gleitbeschichtung der keramischen Fasern kann die Gefahr von Rissen in den keramischen Lagen minimiert werden. Sollten dennoch bei starker mechanischer Belastung vereinzelte Risse, z.B. in einer äußeren keramischen Lage, auftreten, wird durch die anorganischen Gleitschichtlagen erreicht, dass sich diese Risse nicht über die weiteren keramischen Lagen, z.B. die inneren keramischen Lagen, fortsetzen. Auf diese Weise könnte z.B. eine korrosive Substanz, die durch einen Mikroriss in einer äußeren keramischen Lage gelangt, nicht bis zum Innern des Behälters vordringen, sondern nur bis zum Übergang zur nächstinneren (keramischen) Lage. Insbesondere kann so bei Anwesenheit von metallischen Lagen verhindert werden, dass alle metallischen Lagen korrodieren, da korrosive Substanzen nicht bis zu den inneren metallischen Lagen vordringen können. Der Schutz von im Behältergelagerten Substanzen ist somit sehr hoch.

Gemäß einer bevorzugten Ausführungsform des erfindungsgemäßen Bauteils ist das Bauteil ausgewählt aus der Gruppe bestehend aus Rohren, Rohrleitungen, Reaktorgehäusen, Reaktorbauteilen, Behältern und Behälterelementen, insbesondere Behälterplatten, Behälterwandungen, Behälterdeckeln und Behälterböden.

Eine weitere bevorzugte Ausführungsform des erfindungsgemäßen Bauteils ist dadurch gekennzeichnet, dass das Bauteil ein Behälter ist, der mindestens ein erstes Behälterelement, z.B. ein inneres Behälterelement, und mindestens ein um das mindestens eine erste Behälterelement herum angeordnetes zweites Behälterelement, z.B. ein äußeres Behälterelement, aufweist, wobei das mindestens eine zweite Behälterelement den mehrlagigen Werkstoffverbund (bzw. mindestens einen mehrlagigen Werkstoffverbund gemäß der vorliegenden Erfindung) enthält oder daraus besteht. Vorzugsweise kann/können das mindestens eine erste Behälterelement und/oder das mindestens eine zweite Behälterelement als Wandung des Behälters ausgeführt sein. Zusätzlich kann der Behälter einen Behälterdeckel und/oder einen Behälterboden aufweisen, wobei der der Behälterdeckel und/oder der Behälterboden ebenfalls den mehrlagigen Werkstoffverbund (bzw. mindestens einen mehrlagigen Werkstoffverbund gemäß der vorliegenden Erfindung) enthält/enthalten.

Weiterhin ist es bevorzugt, dass das mindestens eine erste Behälterelement ein Material umfasst oder daraus besteht, welches ausgewählt ist aus der Gruppe bestehend aus Metallen, vorzugsweise Eisen (z.B. Gusseisen), Stahl (z.B. Gussstahl), sowie Mischungen, Legierungen und Kombinationen hiervon. Durch dieses Material kann eine hohe Neutronenabsorption erreicht werden.

Eine weitere bevorzugte Ausführungsform des erfindungsgemäßen Behälters zeichnet sich dadurch aus, dass zwischen dem mindestens einen ersten Behälterelement und dem mindestens einen zweiten Behälterelement mindestens eine Zwischenschicht angeordnet ist, wobei die mindestens eine Zwischenschicht vorzugsweise
- ein Material enthält oder daraus besteht, welches ausgewählt ist aus der Gruppe bestehend aus Schwerbeton, Geopolymeren (z.B. Silicaten), Schwermineralien (z.B. Baryt), und Mischungen hiervon, und/oder
- eine Dicke von 10 cm bis 50 cm, bevorzugt von 20 cm bis 30 cm, aufweist.

Durch die Zwischenschicht kann das zweite Behälterelement gegen starke Verformungen beim Einwirken mechanischer Belastungen besser gestützt werden. Zudem kann die Zwischenschicht thermische Spannungen zwischen dem ersten Behälterelement und dem zweiten Behälterelement, die bei Temperaturänderungen entstehen, abmindern. Durch die als bevorzugt genannten Materialien und die als bevorzugt genannte Dicke der Zwischenschicht können diese Aufgaben noch besser erfüllt werden.

Vorzugsweise handelt es sich bei der mindestens einen Zwischenschicht um mindestens eine elastische Zwischenschicht.

Die vorliegende Erfindung betrifft ferner ein Verfahren zur Herstellung eines erfindungsgemäßen mehrlagigen Werkstoffverbunds, bei welchem vorzugsweise mindestens zwei der Lagen, z.B. zwei der keramischen Lagen, des herzustellenden mehrlagigen Werkstoffverbunds jeweils unter Verwendung einer Wickeltechnik hergestellt werden.

Eine bevorzugte Variante des erfindungsgemäßen Verfahrens ist dadurch gekennzeichnet, dass die Lagen des herzustellenden mehrlagigen Werkstoffverbunds
- hergestellt werden, indem eine erste Lage des herzustellenden mehrlagigen Werkstoffverbunds auf einen Wickelkern aufgebracht und danach die weiteren Lagen des herzustellenden mehrlagigen Werkstoffverbunds nacheinander lagenweise auf den Wickelkern, auf den die erste Lage aufgebracht ist, aufgebracht werden, oder
- jeweils separat durch Aufbringen der jeweiligen Lage auf einen Wickelkern, auf den keine Lage des herzustellenden mehrlagigen Werkstoffverbunds aufgebracht ist, hergestellt werden und danach zum mehrlagigen Werkstoffverbund zusammengefügt werden.

Vorzugsweise handelt es sich bei dem Wickelkern um einen zylindrischen Wickelkern.

Es ist möglich die Einzellagen des Multilagenaufbaus in Zylinderform separat und damit nahtfrei herzustellen und diese Einzellagen erst nach der Applikation von weichen Zwischenschichten zusammenzuführen, um einen Formschluss zu erzielen. In diesem Fall werden vorzugsweise sehr enge Fügespalte für die Zwischenschichten vorgesehen, um so eine hohe Passfähigkeit zu gewährleisten. Beispielsweise können die Metallrohre in heißem Zustand mit den CMC-Keramiklagen verbunden werden und die Lagenpassung kann durch Einschrumpfen der Materiallagen auf Raumtemperatur erreicht werden.

Eine weitere bevorzugte Variante des erfindungsgemäßen Verfahrens zeichnet sich dadurch aus, dass die keramischen Lagen (des herzustellenden mehrlagigen Werkstoffverbunds) hergestellt werden, indem jeweils (d.h. für die Herstellung je einer der herzustellenden Lagen) mindestens eine Lage aufgewickelt wird, die keramisches Matrixmaterial und keramische Fasern, welche zumindest teilweise mit einer anorganischen Gleitbeschichtung beschichtet sind, enthält, und die mindestens eine die keramischen Fasern und das keramische Matrixmaterial enthaltende Lage mindestens einer Wärmebehandlung oder einer Kaltaushärtung unterzogen wird, wobei vorzugsweise
- die mindestens eine Wärmebehandlung bei einer Temperatur von 500 °C bis 1300 °C, bevorzugt von 900 °C bis 1100 °C, und/oder über eine Dauer von 12 h bis 36 h, bevorzugt von 12 h bis 24 h, erfolgt, und/oder
- jeweils vor der Wärmebehandlung keramische Partikel und/oder glasige Partikel auf die mindestens eine die keramischen Fasern und das keramische Matrixmaterial enthaltende Lage, vorzugsweise mittels Sprühverfahren und/oder Siebdruck, aufgebracht werden.

Die keramischen Fasern können vor der Ablage mit dem keramischen Matrixmaterial getränkt oder bereits als vorgefertigte Nass-Prepregs wickeltechnisch verarbeitet werden. Für die gleichmäßige Faserablage können programmierbare Wickelanlagen oder Wickelroboter eingesetzt werden. Die Faserablage kann in Winkeln von 10° bis 80° erfolgen. Die einzelnen keramischen Lagen können unterschiedlich dick sein und mit Wandstärken bevorzugt mit Dicken zwischen 0,1 und 10 mm ausgeführt werden. Die Faserablage kann in Bauteillängen und Durchmessern von > 100 mm bis zu mehreren Metern ausgeführt werden. Beispielsweise wird nach dem Wickeln jeder keramischen Lage die Außenseite mit weiteren keramischen oder glasigen Partikeln beaufschlagt - z.B. durch Sprühverfahren oder Siebdruck. Dann kann eine Erwärmung der bestehenden Schichten erfolgen, so dass die Keramik- oder Glaspartikel aufschmelzen und durch Kapillarkräfte in die Faserstruktur gesaugt werden (Schmelzinfiltrationsverfahren). Der Schmelzpunkt liegt dabei vorzugsweise unter der Temperatur, bei der die Keramikfasern geschädigt werden können (und vorzugsweise unter dem Schmelzpunkt optional vorhandener Metall-Lagen), z.B. indem kristallisierende Gläser oder eutektische Mischungen eingesetzt werden. Die Menge der aufgesprühten Partikel kann so berechnet werden, dass gerade eine dichte Matrix in der Faserstruktur entsteht.

Die mindestens eine Wärmebehandlung wird vorzugsweise bei einer Temperatur durchgeführt die unter dem Schmelzpunkt von im herzustellenden Werkstoffverbund vorhandenen Metall-Lagen und/oder unter dem Schmelzpunkt von im herzustellenden Werkstoffverbund vorhandenen Polymer-Lagen liegt.

In einer bevorzugten Variante können die vorgefertigten Keramiklagen bereits vor dem Verbinden einer Wärmebehandlung bei hohen Temperaturen unterzogen wurden. Dies ist insbesondere dann sinnvoll, wenn der herzustellende Werkstoffverbund Polymer-Lagen aufweist.

Sollte der herzustellende Werkstoffverbund Polymer-Lagen umfassen kann auch kaltaushärtendes keramisches Matrixmaterial für die Herstellung der keramischen Lagen eingesetzt werden, um die Polymer-Lagen bei der Herstellung thermisch nicht zu hoch zu belasten. Auf eine Wärmebehandlung bei der Herstellung der keramischen Lagen kann dann verzichtet werden.

Gemäß einer weiteren bevorzugten Variante des erfindungsgemäßen Verfahrens werden die anorganischen Gleitschichtlagen (des herzustellenden mehrlagigen Werkstoffverbunds) hergestellt, indem jeweils (d.h. für die Herstellung je einer der herzustellenden Lagen) ein anorganische Partikel enthaltender Schlicker auf Basis eines Polymers oder Wasser als Medium aufgetragen wird, vorzugsweise durch Sprühen, Aufstreichen oder Tauchen.

Eine weitere bevorzugte Variante des erfindungsgemäßen Verfahrens ist dadurch gekennzeichnet, dass der mehrlagige Werkstoffverbund zusätzlich
- Metall-Lagen umfasst, die hergestellt werden, indem jeweils (d.h. für die Herstellung je einer der herzustellenden Lagen) mindestens eine Lage in Form eines Metall-Bands oder einer Metall-Folie aufgewickelt wird, und/oder
- Polymer-Lagen umfasst, die hergestellt werden, indem jeweils (d.h. für die Herstellung je einer der herzustellenden Lagen) mindestens eine Lage in Form einer Polymer-Folie aufgewickelt und danach mindestens einer Wärmebehandlung unterzogen wird.

Durch die mindestens eine Wärmebehandlung kann ein stoffschlüssiger Verbund mit der angrenzenden Lage erreicht werden. Dabei erweicht das Polymer im Glasübergangsbereich bis maximal zur Glasübergangstemperatur (Tg). In diesem erwärmten Zustand ist eine gute Verformbarkeit gewährleistet. Der Prozess kann auch mit Druckunterstützung und unter Vakuum durchgeführt werden, um einen guten Formschluss mit den angrenzenden Lagen und eine möglichst geringe Porosität zu erzielen.

Bei Verwendung der Polymerlage kann der mehrlagige Gesamtverbund durch Zusammenfügen der Polymerlagen mit den weiteren Lagen des Mehrschichtverbunds hergestellt werden. Die vorgefertigten Keramiklagen sollten schon die finale Porosität aufweisen, indem sie z.B. bereits vor dem Verbinden einer Wärmebehandlung bei hohen Temperaturen unterzogen wurden.

Die vorliegende Erfindung betrifft zudem ein Verfahren zur Herstellung eines erfindungsgemäße Bauteils, bei welchem zunächst ein erfindungsgemäßer mehrlagiger Werkstoffverbund bereitgestellt oder ein mehrlagiger Werkstoffverbund mit einem erfindungsgemäßen Verfahren zur Herstellung eines mehrlagigen Werkstoffverbunds hergestellt wird, und danach unter Verwendung des bereitgestellten bzw. hergestellten mehrlagigen Werkstoffverbunds das herzustellende Bauteil hergestellt wird.

Ein bevorzugtes Herstellverfahren beruht auf der Wickeltechnik. Beispielsweise wird dabei ein Wickelkern, dessen Durchmesser dem Innenbehälter (bzw. dem ersten Behälterelement) - vorzugsweise inklusive der Zwischenschicht - entspricht, abwechselnd mit Metalllagen und Fasern umwickelt. Die Fasern können in Form von Rovings (Bündeln), UD-Tapes (Bändern aus unidirektionalen Fasern) oder Bändern mit textiler Struktur (z.B. Gewebe) aufgebracht werden. Als Fasermaterial können hochsteife Keramikfasern aus Mullit oder Aluminiumoxid verwendet werden. Die Fasern können vor der Ablage mit keramischer Matrix getränkt oder bereits als vorgefertigte Nass-Prepregs wickeltechnisch verarbeitet werden. Für die gleichmäßige Faserablage auf einen Kern, in Form eines zylindrischen Innenbehälters oder eines zylindrischen Entformungskerns, können programmierbare Wickelanlagen oder -Roboter eingesetzt werden.

Die Faserablage kann in Winkeln von 10° bis 80° erfolgen. Die einzelnen Faserlagen können unterschiedlich dick sein und mit Wandstärken bevorzugt mit Dicken zwischen 0,1 und 10 mm ausgeführt werden. Die Faserablage kann in Bauteillängen und Durchmessern von > 100 mm bis zu mehreren Metern ausgeführt werden. Beispielsweise wird nach dem Wickeln jeder keramischen Lage die Außenseite mit weiteren keramischen oder glasigen Partikeln beaufschlagt - z.B. durch Sprühverfahren oder Siebdruck. Dann kann eine Erwärmung der bestehenden Schichten erfolgen, so dass die Keramik- oder Glaspartikel aufschmelzen und durch Kapillarkräfte in die Faserstruktur gesaugt werden (Schmelzinfiltrationsverfahren). Der Schmelzpunkt sollte dazu unter dem Schmelzpunkt der Metallschicht und unter der Temperatur liegen, bei der die Keramikfasern geschädigt werden, z.B. indem kristallisierende Gläser oder eutektische Mischungen eingesetzt werden. Die Menge der aufgesprühten Partikel kann so berechnet werden, dass gerade eine dichte Matrix in der Faserstruktur entsteht. Nach dem Abkühlen kann die nächste Metalllage aufgebracht werden. In ähnlicher Weise wie die keramische Fasern können die metallischen Einzellagen als Metallfolien oder -bänder mittels Wickelverfahren automatisiert abgelegt werden. Um eine möglichst spaltfreie Schicht mit guter Anbindung an die benachbarten Lagen zu erzeugen, können zusätzlich metallbasierte Lotpasten appliziert werden. Der Vorgang kann fortgesetzt werden bis der Schichtverbund vollständig ist. Der Wickelkern kann dann unter Ausnutzung unterschiedlicher thermischer Ausdehnungskoeffizienten bei einer geeignet gewählten Temperatur entfernt und die Außenhülle - ebenfalls bei einer geeignet gewählten Temperatur - auf den Innenbehälter aufgesetzt werden.

Es ist auch möglich die Einzellagen des Multilagenaufbaus in Zylinderform separat und damit nahtfrei herzustellen und diese Einzellagen erst nach der Applikation von weichen Zwischenschichten zusammenzuführen, um einen Formschluss des Außenzylinders zu erzielen. In diesem Fall sollten sehr enge Fügespalte für die Zwischenschichten vorgesehen werden, damit eine hohe Passfähigkeit gewährleistet wird. Beispielsweise können die Metallrohre in heißem Zustand mit den CMC-Keramiklagen verbunden werden und die Lagenpassung kann durch Einschrumpfen der Materiallagen auf Raumtemperatur erreicht werden.

Einzelkomponenten eines Behälters wie Deckel, Bodenplatte und Wandung (z.B. Zylinder) können durch form- und stoffschlüssige Fügungen miteinander verbunden werden. Deckel, Bodenplatte und Wandung (z.B. Zylinder) können unabhängig voneinander gefertigt werden. Durch Fügen kann die Wandung (vorzugsweise Zylinderform) stirnseitig mit der Deckelform und der der Bodenplattenform verbunden werden. Der Deckel und die Bodenplatte können durch eine ebene Ablage von Laminaten gefertigt werden. Dabei kann derselbe Hybridaufbau wie bei der (beispielsweise zylindrischen) Wandung (z.B. dem zylindrischen Außenbehälter) gewählt werden. Das Fügen des Verbunds kann mit keramischen oder metallischen Loten erfolgen. Die Platten für Deckel und Bodenplatte können separat gefertigt und mechanisch bearbeitet werden, so dass eine hohe Passgenauigkeit beim Fügen erzielt wird. Die Dicke des Bodens/Deckels kann dabei der Wandstärke des Außenbehälters/zweiten Behälterelements entsprechen.

Ferner betrifft die vorliegende Erfindung auch die Verwendung eines erfindungsgemäßen mehrlagigen Werkstoffverbunds oder eines erfindungsgemäßen Bauteils
- als Behälter für den Transport und/oder die Endlagerung von radioaktiven Stoffen oder als Element (z.B. Wandung, Deckel, Bodenplatte) eines solchen Behälters,
- als Behälter für Sonderabfälle, z.B. Sonderabfälle aus der Chemie, oder als Element (z.B. Wandung, Deckel, Bodenplatte) eines solchen Behälters,
- als Behälterfür Rückstände aus Verbrennungsprozessen, z.B. Schlacke, oder als Element (z.B. Wandung, Deckel, Bodenplatte) eines solchen Behälters,
- als Reaktor in der Chemietechnik oder Verfahrenstechnik, oder als Bauteil eines solchen Reaktors,
- als Rohrleitung zur Durchführung von Medien wie z.B. Säuren, Laugen oder heißen Abgasen, oder als Rohr einer solchen Rohrleitung.

Die vorliegende Erfindung betrifft auch die folgenden Aspekte:

### Aspekt 1

Mehrlagiger Werkstoffverbund umfassend keramische Lagen (2) und zwischen den keramischen Lagen (2) angeordnete anorganische Gleitschichtlagen (4), wobei die keramischen Lagen (2) jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen.

### Aspekt 2

Mehrlagiger Werkstoffverbund nach dem vorhergehenden Aspekt, dadurch gekennzeichnet, dass die keramische Matrix und/oder die keramischen Fasern mindestens eine Oxidkeramik enthält/enthalten oder daraus besteht/bestehen, welche vorzugsweise ausgewählt ist aus der Gruppe bestehend aus Al₂O₃-Keramiken, Mullit-Keramiken, ZrO₂-Keramiken sowie Mischungen und Kombinationen hiervon.

### Aspekt 3

Mehrlagiger Werkstoffverbund nach einem der vorhergehenden Aspekte, dadurch gekennzeichnet, dass die anorganischen Gleitschichtlagen (4) und/oder die mindestens eine anorganische Gleitbeschichtung mindestens ein Material enthält/enthalten oder daraus besteht/bestehen, welches innerhalb seiner Kristallstruktur eine Schichtstruktur aufweist, bei welcher Bindungskräfte zwischen den Atomen in einer Schichtebene größer sind als Bindungskräfte zwischen den Schichtebenen, wobei das mindestens eine Material vorzugsweise ausgewählt ist aus der Gruppe bestehend aus Schichtsilicaten, Bornitrid, Graphit, sowie Mischungen und Kombinationen hiervon.

### Aspekt 4

Mehrlagiger Werkstoffverbund nach einem der vorhergehenden Aspekte, dadurch gekennzeichnet, dass zwischen jeweils zwei der keramischen Lagen (2) immer eine oder zwei der Gleitschichtlagen (4) angeordnet ist/sind.

### Aspekt 5

Mehrlagiger Werkstoffverbund nach einem der vorhergehenden Aspekte, dadurch gekennzeichnet, dass der mehrlagige Werkstoffverbund zusätzlich Metall-Lagen (5) umfasst, wobei vorzugsweise
- die Metall-Lagen (5) jeweils mindestens ein Material enthalten oder daraus bestehen, welches ausgewählt ist aus der Gruppe bestehend aus Titan, Titan-Legierungen, Aluminium, Aluminium-Legierungen, Kupfer, Eisen-Legierungen, Nickel-Legierungen, Cobalt-Legierungen, sowie Mischungen, Legierungen und Kombinationen hiervon, und/oder
- zwischen jeweils zwei der keramischen Lagen (2) immer eine der Metall-Lagen (5) angeordnet ist, wobei besonders bevorzugt zwischen jeweils einer der keramischen Lagen (2) und einer der Metall-Lagen (5) immer eine der anorganischen Gleitschichtlagen (4) angeordnet ist, und/oder
- die Metall-Lagen (5) jeweils eine Dicke von 0,1 mm bis 1 mm, bevorzugt von 0,1 mm bis 0,5 mm, aufweisen.

### Aspekt 6

Mehrlagiger Werkstoffverbund nach einem der vorhergehenden Aspekte, dadurch gekennzeichnet, dass der mehrlagige Werkstoffverbund zusätzlich Polymer-Lagen (6) umfasst, wobei vorzugsweise
- die Polymer-Lagen (6) jeweils mindestens ein Polymer enthalten oder daraus bestehen, welches ausgewählt ist aus der Gruppe bestehend aus Polyimiden, High-Density-Polyethylen, sowie Mischungen und Kombinationen hiervon, und/oder
- zwischen jeweils zwei der keramischen Lagen (2) immer eine der Polymer-Lagen (6) angeordnet ist, wobei besonders bevorzugt jeweils zwischen zwei der keramischen Lagen (2) eine der Polymer-Lagen (6) und eine oder zwei der anorganischen Gleitschichtlagen (4) angeordnet sind, und/oder
- die Polymer-Lagen (6) jeweils Borcarbid-Partikel enthalten, und/oder
- die Polymer-Lagen (6) jeweils eine Dicke von 0,1 mm bis 5 mm, bevorzugt von 0,1 mm bis 1 mm, aufweisen.

### Aspekt 7

Mehrlagiger Werkstoffverbund nach einem der vorhergehenden Aspekte, dadurch gekennzeichnet, dass der mehrlagige Werkstoffverbund mindestens drei, bevorzugt mindestens vier, besonders bevorzugt mindestens fünf, ganz besonders bevorzugt mindestens zehn, der keramischen Lagen (2) umfasst.

### Aspekt 8

Mehrlagiger Werkstoffverbund nach einem der vorhergehenden Aspekte, dadurch gekennzeichnet, dass die keramischen Fasern in Form von Rovings, in Form von Bändern aus unidirektionalen Fasern und/oder in Form von Bändern mit textiler Struktur, z.B. Geweben, angeordnet sind, welche mit der mindestens einen anorganischen Gleitbeschichtung beschichtet sind.

### Aspekt 9

Mehrlagiger Werkstoffverbund nach einem der vorhergehenden Aspekte, dadurch gekennzeichnet, dass
- die keramischen Lagen (2) eine Dicke von 0,1 mm bis 10 mm, bevorzugt von 0,1 mm bis 3 mm, aufweisen, und/oder
- die anorganischen Gleitschichtlagen (4) eine Dicke von 0,1 mm bis 5 mm, bevorzugt von 0,1 mm bis 1 mm, aufweisen.

### Aspekt 10

Bauteil umfassend mindestens einen mehrlagigen Werkstoffverbund gemäß einem der vorhergehenden Aspekte.

### Aspekt 11

Bauteil nach Aspekt 10, dadurch gekennzeichnet, dass das Bauteil ausgewählt ist aus der Gruppe bestehend aus Rohren, Rohrleitungen, Reaktorgehäusen, Reaktorbauteilen, Behältern und Behälterelementen.

### Aspekt 12

Bauteil nach Aspekt 10 oder 11, dadurch gekennzeichnet, dass das Bauteil ein Behälter ist, der mindestens ein erstes Behälterelement (7) und mindestens ein um das mindestens eine erste Behälterelement (7) herum angeordnetes zweites Behälterelement (8) aufweist, wobei das mindestens eine zweite Behälterelement (8) den mindestens einen mehrlagigen Werkstoffverbund enthält oder daraus besteht.

### Aspekt 13

Bauteil nach Aspekt 12, dadurch gekennzeichnet, dass das mindestens eine erste Behälterelement (7) ein Material umfasst oder daraus besteht, welches ausgewählt ist aus der Gruppe bestehend aus Metallen, vorzugsweise Eisen, Stahl, sowie Mischungen, Legierungen und Kombinationen hiervon.

### Aspekt 14

Bauteil nach Aspekt 12 oder 13, dadurch gekennzeichnet, dass zwischen dem mindestens einen ersten Behälterelement (7) und dem mindestens einen zweiten Behälterelement (9) mindestens eine Zwischenschicht (8) angeordnet ist, wobei die mindestens eine Zwischenschicht (8) vorzugsweise
- ein Material enthält oder daraus besteht, welches ausgewählt ist aus der Gruppe bestehend aus Schwerbeton, Geopolymeren, Schwermineralien, und Mischungen hiervon, und/oder
- eine Dicke von 10 cm bis 50 cm, bevorzugt von 20 cm bis 30 cm, aufweist.

### Aspekt 15

Verfahren zur Herstellung eines mehrlagigen Werkstoffverbunds gemäß einem der Aspekte 1 bis 9, bei welchem mindestens zwei der Lagen des herzustellenden mehrlagigen Werkstoffverbunds jeweils unter Verwendung einer Wickeltechnik hergestellt werden.

### Aspekt 16

Verfahren nach Aspekt 15, dadurch gekennzeichnet, dass die Lagen des herzustellenden mehrlagigen Werkstoffverbunds
- hergestellt werden, indem eine erste Lage des herzustellenden mehrlagigen Werkstoffverbunds auf einen Wickelkern aufgebracht und danach die weiteren Lagen des herzustellenden mehrlagigen Werkstoffverbunds nacheinander lagenweise auf den Wickelkern, auf den die erste Lage aufgebracht ist, aufgebracht werden, oder
- jeweils separat durch Aufbringen der jeweiligen Lage auf einen Wickelkern, auf den keine Lage des herzustellenden mehrlagigen Werkstoffverbunds aufgebracht ist, hergestellt werden und danach zum mehrlagigen Werkstoffverbund zusammengefügt werden.

### Aspekt 17

Verfahren nach Aspekt 15 oder 16, dadurch gekennzeichnet, dass die keramischen Lagen (2) hergestellt werden, indem jeweils mindestens eine Lage aufgewickelt wird, die keramisches Matrixmaterial und keramische Fasern, welche zumindest teilweise mit einer anorganischen Gleitbeschichtung beschichtet sind, enthält, und die mindestens eine die keramischen Fasern und das keramische Matrixmaterial enthaltende Lage mindestens einer Wärmebehandlung oder einer Kaltaushärtung unterzogen wird, wobei vorzugsweise
- die mindestens eine Wärmebehandlung bei einer Temperatur von 500 °C bis 1300 °C, bevorzugt von 900 °C bis 1100 °C, und/oder über eine Dauer von 12 h bis 36 h, bevorzugt von 12 h bis 24 h, erfolgt, und/oder
- jeweils vor der Wärmebehandlung keramische Partikel und/oder glasige Partikel auf die mindestens eine die keramischen Fasern und das keramische Matrixmaterial enthaltende Lage, vorzugsweise mittels Sprühverfahren und/oder Siebdruck, aufgebracht werden.

### Aspekt 18

Verfahren nach einem der Aspekte 15 bis 17 dadurch gekennzeichnet, dass die anorganischen Gleitschichtlagen (4) hergestellt werden, indem jeweils ein anorganische Partikel enthaltender Schlicker auf Basis eines Polymers oder Wasser als Medium aufgetragen, vorzugsweise durch Sprühen, Aufstreichen oder Tauchen aufgetragen, wird.

### Aspekt 19

Verfahren nach einem der Aspekte 15 bis 18 dadurch gekennzeichnet, dass der mehrlagige Werkstoffverbund zusätzlich
- Metall-Lagen (5) umfasst, die hergestellt werden, indem jeweils mindestens eine Lage in Form eines Metall-Bands oder einer Metall-Folie aufgewickelt wird, und/oder
- Polymer-Lagen (6) umfasst, die hergestellt werden, indem jeweils mindestens eine Lage in Form einer Polymer-Folie aufgewickelt und danach mindestens einer Wärmebehandlung unterzogen wird.

### Aspekt 20

Verfahren zur Herstellung eines Bauteils gemäß einem der Aspekte 10 bis 14, bei welchem zunächst ein mehrlagiger Werkstoffverbund gemäß einem der Aspekte 1 bis 9 bereitgestellt oder ein mehrlagiger Werkstoffverbund mit einem Verfahren gemäß einem der Aspekte 15 bis 19 hergestellt wird, und danach unter Verwendung des bereitgestellten bzw. hergestellten mehrlagigen Werkstoffverbunds das herzustellende Bauteil hergestellt wird.

### Aspekt 21

Verwendung eines mehrlagigen Werkstoffverbunds gemäß einem der Aspekte 1 bis 9 oder eines Bauteils gemäß einem der Aspekte 10 bis 14
- als Behälter für den Transport und/oder die Endlagerung von radioaktiven Stoffen oder als Element (z.B. Wandung, Deckel, Bodenplatte) eines solchen Behälters,
- als Behälter für Sonderabfälle, z.B. Sonderabfälle aus der Chemie, oder als Element (z.B. Wandung, Deckel, Bodenplatte) eines solchen Behälters,
- als Behälterfür Rückstände aus Verbrennungsprozessen, z.B. Schlacke, oder als Element (z.B. Wandung, Deckel, Bodenplatte) eines solchen Behälters,
- als Reaktor in der Chemietechnik oder Verfahrenstechnik, oder als Bauteil eines solchen Reaktors,
- als Rohrleitung zur Durchführung von Medien wie z.B. Säuren, Laugen oder heißen Abgasen, oder als Rohr einer solchen Rohrleitung.

Anhand der nachfolgenden Figuren und Beispiele soll die vorliegende Erfindung näher erläutert werden, ohne diese auf die hier gezeigten spezifischen Ausführungsformen und Parameter zu beschränken.

### Ausführungsbeispiel 1

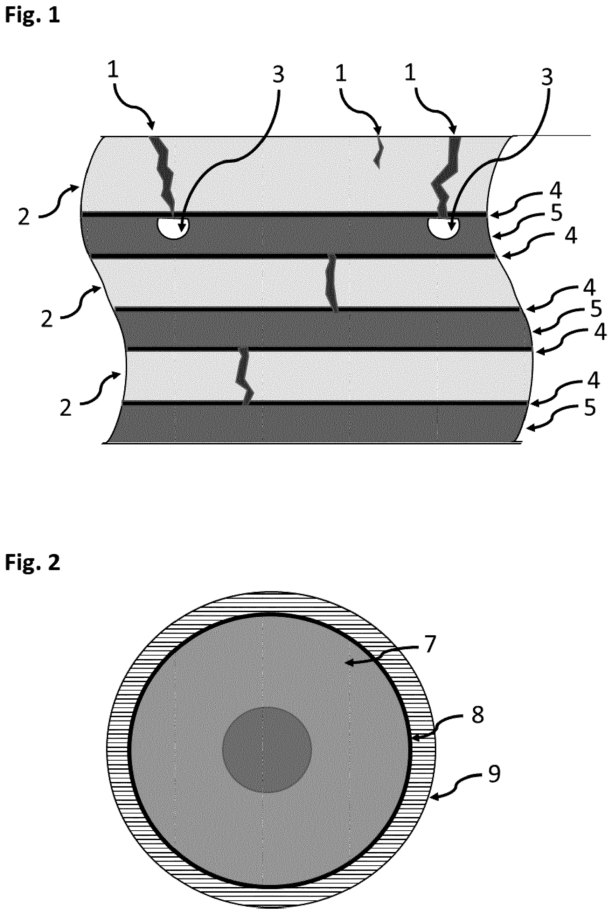

In Fig. 1 ist ein mehrlagiger Werkstoffverbund gezeigt, der keramische Lagen 2 und zwischen den keramischen Lagen 2 angeordnete anorganische Gleitschichtlagen 4 umfasst, wobei die keramischen Lagen 2 jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen. Zusätzlich umfasst der mehrlagige Werkstoffverbund Metall-Lagen 5, wobei zwischen jeweils zwei der keramischen Lagen 2 immer eine der Metall-Lagen 5 angeordnet ist und wobei zwischen jeweils einer der keramischen Lagen 2 und einer der Metall-Lagen 5 immer eine der Gleitschichtlagen 4 angeordnet ist.

In Fig. 1 ist der mehrlagige Werkstoffverbund beispielhaft mit drei keramischen Lagen 2, drei Metall-Lagen 5 und fünf anorganischen Gleitschichtlagen 4 dargestellt. Der mehrlagige Werkstoffverbund kann jedoch auch noch weitere keramische Lagen, Metall-Lagen und anorganische Gleitschichtlagen enthalten, die dann in derselben Abfolge an Lagen, wie in Fig. 1 dargestellt, an die bereits dargestellten Lagen angefügt sind.

In Fig. 2 ist ein Bauteil dargestellt, welches den in Fig. 1 gezeigten mehrlagigen Werkstoffverbund umfasst, wobei es sich bei dem Bauteil um einen Behälter für den Transport und/oder die Endlagerung von radioaktiven Stoffen handelt. Der Behälter weist ein erstes bzw. inneres Behälterelement 7 und ein um das erste bzw. innere Behälterelement 7 herum angeordnetes zweites bzw. äußeres Behälterelement 9 auf, wobei das zweite bzw. äußere Behälterelement 9 aus dem in Fig. 1 gezeigten mehrlagigen Werkstoffverbund besteht. Zwischen dem ersten Behälterelement 7 und dem zweiten Behälterelement 9 kann eine Zwischenschicht 8 angeordnet sein.

Die einzelnen Lagen des äußeren Behälterelements 9 übernehmen unterschiedliche mechanische und chemische Funktionen. Die Metall-Lagen 5 sind dicht und duktil. Die keramischen Lagen 2 sind chemisch inert, so dass es zu keiner Korrosion des inneren Behälterelements 7 und der Metall-Lagen 5 des äußeren Behälterelements 9 kommt. Damit das Risiko einer Diffusion von korrosiven Spezies durch die keramischen Lagen 2 minimiert wird, weisen diese eine Porosität von maximal 30 Vol.-% und damit eine vergleichsweise dichte keramische Matrix auf, in die die keramischen Fasern eingebettet sind. Zwischen der Matrix und den Verstärkungsfasern ist eine anorganische Gleitbeschichtung (Interphase) angeordnet, die einen Faser-Pullout bei hohen mechanischen Lasten und damit Energieabsorption ermöglicht. Das Zusammenspiel zwischen Verstärkungsfasern, Interphase und Matrix sorgt für eine hohe Bruchdehnung der keramischen Lagen 2 und verhindert deren katastrophales Versagen. Allerdings können bei starker mechanischer Belastung trotzdem lokale Mikrorisse 1 in den keramischen Lagen 2 entstehen. Damit diese Mikrorisse 1 nicht durch die Metall-Lagen 5 fortgesetzt werden, wird die Anbindung zwischen den keramischen Lagen 2 und den Metalllagen 5 schwach gehalten, was dadurch erreicht wird, dass zwischen Metall-Lagen 5 und keramischen Lagen 2 eine Gleitschichtlage 4 (bzw. eine weitere Interphase) angeordnet ist, die die Anhaftung kontrolliert. Die Gleitschichtlage 4 kann den Transport korrosiver Spezies in der Grenzfläche zwischen keramischer Lage 2 und Metall-Lage 5 wirkungsvoll unterbinden. Auch wenn bei mechanischer Belastung einzelne Mikrorisse 1 in den keramischen Lagen 2 entstehen, ist der Schichtverbund weiterhin wirksam. Die Mikrorisse 1 wandern nicht in die Metall-Lage 5, weil sich die Grenzfläche zwischen Metall-Lage 5 und keramischer Lage 2 an der Rissspitze ablöst und auf diese Weise lokale Spannungen durch plastische Verformung des Metalls ausgeglichen werden. Korrosive Spezies können zwar durch die Mikrorisse 1 in der äußersten keramischen Lage an die Außenseite der äußersten Metall-Lage diffundieren und dort eine Korrosionszone 3 bilden. Durch die seitlich versetzten Mikrorisse 1 in den unterschiedlichen keramischen Lagen 2 ist jedoch eine Fortsetzung der Korrosion spätestens an der darunterliegenden keramischen Lage unterbunden.

Durch die lagenweise Kombination der Werkstoffe lässt sich ein äußeres Behälterelement 9 aufbauen, das einen hohen mechanischen und chemischen Schutz bietet. Je nach Sicherheitsanforderungen lässt sich die Anzahl der Lagen erhöhen. Da die einzelnen Lagen sehr dünn sind (ca. 0,1-1 mm) und die verwendeten Werkstoffe eine geringe Dichte aufweisen, ist das äußere Behälterelement 9 leicht. Es kann außerdem hohe Temperaturen überstehen, da es keine organischen Komponenten enthält. Aus dem gleichen Grund ist auch keine Degradation durch die Strahlenbelastung zu erwarten.

Als Keramik können beispielsweise Oxidkeramiken mit hoher thermodynamischer Stabilität (z.B. Al₂O₃) eingesetzt werden. Solche Oxidkeramiken können als Material für die keramischen Fasern und die keramische Matrix (und auch für die Interphase) genutzt werden. Bei der Interphase ist eine schwache Anbindung zwischen Matrix und Faser bzw. zwischen keramischer Lage und Metall-Lage vorhanden. Dies kann beispielsweise durch Kristallstrukturen mit sehr schwacher Bindung zwischen einzelnen Schichten (z.B. Schichtsilicate) erreicht werden. Die Metall-Lagen 5 ermöglichen eine Stabilisierung der keramischen Lagen 2 durch plastische Verformung bei mechanischen Belastungen und verhindern, dass sich durchgehende Risse im Schutzbehälter ausbilden können. Geeignet sind hierzu beispielsweise Titan oder Kupfer. Titan ist mit einer Dichte von 4,5 g/cm³ sehr leicht, korrosionsfest und weist eine zu den Oxidkeramiken kompatible thermische Ausdehnung von 8,6x10 -6 1/K auf.

Das innere Behälterelement 7 kann als Tragkorb ausgebildet sein. Das innere Behälterelement 7 kann aus Metall (z.B. Gusseisen oder Gussstahl) zur Neutronenabsorption bestehen. Als Metalle kommen beispielsweise Stahl oder deren Legierungen zum Einsatz, die sich als Absorptionsmaterial für Neutronenstrahlung bewährt haben. Eine optionale Zwischenschicht 8 grenzt das innere Behälterelement 7 vom äußeren Behälterelement 9 ab. Die Zwischenschicht 8 soll das äußere Behälterelement 9 gegen starke Verformungen beim Einwirken mechanischer Belastungen stützen. Sie soll andererseits thermische Spannungen zwischen innerem Behälterelement 7 und äußerem Behälterelement 9, die bei Temperaturänderungen entstehen, abmindern. Die Dicke und die (elastischen) Eigenschaften der Zwischenschicht 8 können so optimiert werden, dass beide Aufgaben erfüllt werden. Das äußere Behälterelement 9 dient als chemischer und mechanischer Schutz, u.a. als Korrosionsschutz. Durch den Werkstoffverbund im äußeren Behälterelement 9 kann die bei Belastung auftretende Rissenergie durch Verformung der Metall-Lagen 5 und der keramischen Lagen 2 abgebaut und auf diese Weise ein dauerhafter Schutz gewährleistet werden.

### Ausführungsbeispiel 2

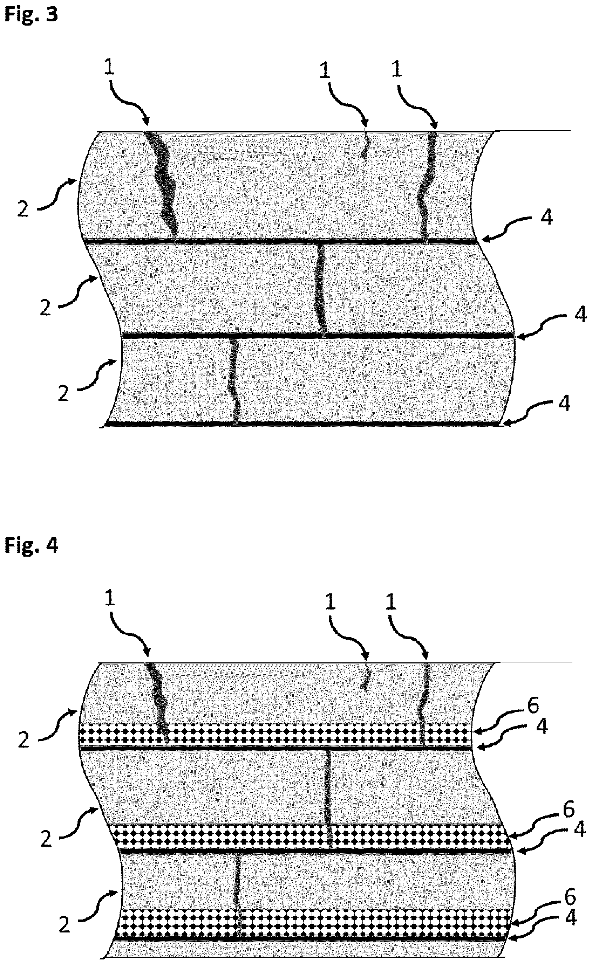

In Fig. 3 ist ein mehrlagiger Werkstoffverbund gezeigt, der keramische Lagen 2 und zwischen den keramischen Lagen 2 angeordnete anorganische Gleitschichtlagen 4 umfasst, wobei die keramischen Lagen 2 jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen.

In Fig. 3 ist der mehrlagige Werkstoffverbund beispielhaft mit drei keramischen Lagen 2 und drei anorganischen Gleitschichtlagen 4 dargestellt. Der mehrlagige Werkstoffverbund kann jedoch auch noch weitere keramische Lagen und anorganische Gleitschichtlagen enthalten, die dann in derselben Abfolge an Lagen, wie in Fig. 3 dargestellt, an die bereits dargestellten Lagen angefügt sind.

Auch der in Fig. 3 gezeigte Werkstoffverbund kann von einem Bauteil umfasst sein, bei welchem es sich um einen Behälter handelt. Beispielsweise kann der Behälter ein erstes bzw. inneres Behälterelement und ein zweites bzw. äußeres Behälterelement umfassen, wobei das äußere Behälterelement aus dem mehrlagigen Werkstoffverbund besteht.

Bei diesem schichtförmigen Aufbau des Außenbehälters wechseln sich keramische Lagen 2 mit anorganischen Gleitschichtlagen 4, z.B. aus Schichtsilicaten, ab, die für eine schwache Anbindung sorgen. Auf Metall-Lagen wird hierbei ganz verzichtet. Dadurch ist eine Korrosion an den Grenzflächen nicht möglich, da die keramischen Lagen 2 bzw. die CMC-Lagen korrosionsfest sind Mikrorisse 1 in den äußeren keramischen Lagen werden durch die folgenden inneren keramischen Lagen jeweils an den Grenzflächen der keramischen Lagen gestoppt.

### Ausführungsbeispiel 3

In Fig. 4 ist ein mehrlagiger Werkstoffverbund gezeigt, der keramische Lagen 2 und zwischen den keramischen Lagen 2 angeordnete anorganische Gleitschichtlagen 4 umfasst, wobei die keramischen Lagen 2 jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen. Zusätzlich umfasst der mehrlagige Werkstoffverbund Polymer-Lagen 6, wobei zwischen jeweils zwei der keramischen Lagen 2 immer eine der Polymer-Lagen 6 angeordnet ist und wobei jeweils zwischen zwei der keramischen Lagen 2 eine der Polymer-Lagen 6 und eine der Gleitschichtlagen 4 angeordnet sind.

In Fig. 4 ist der mehrlagige Werkstoffverbund beispielhaft mit vier keramischen Lagen 2, drei Polymer-Lagen 6 und drei anorganischen Gleitschichtlagen 4 dargestellt. Der mehrlagige Werkstoffverbund kann jedoch auch noch weitere keramische Lagen, Polymer-Lagen und anorganische Gleitschichtlagen enthalten, die dann in derselben Abfolge an Lagen, wie in Fig. 4 dargestellt, an die bereits dargestellten Lagen angefügt sind.

Auch der in Fig. 4 gezeigte Werkstoffverbund kann von einem Bauteil umfasst sein, bei welchem es sich um einen Behälter handelt. Beispielsweise kann der Behälter ein erstes bzw. inneres Behälterelement und ein zweites bzw. äußeres Behälterelement umfassen, wobei das äußere Behälterelement aus dem mehrlagigen Werkstoffverbund besteht.

Bei diesem schichtförmigen Aufbau des Außenbehälters wechseln sich keramische Lagen 2 mit Polymer-Lagen 6 (und anorganischen Gleitschichtlagen 4) ab. Auf Metall-Lagen wird ganz verzichtet. Die Polymer-Lagen 6 können jeweils Borcarbid-Partikel (B₄C-Partikel) zur Neutronenabsorption enthalten. Die Polymer-Lagen 6 werden mit den keramischen Lagen 2 durch die anorganischen Gleitschichtlagen 2 verbunden. Bei diesem Multilagenaufbau werden die Mikrorisse 1 in den äußeren keramischen Lagen ebenfalls an den Grenzflächen der inneren keramischen Lagen gestoppt.

## Patentansprüche

1. Mehrlagiger Werkstoffverbund umfassend keramische Lagen (2) und zwischen den keramischen Lagen (2) angeordnete anorganische Gleitschichtlagen (4), wobei die keramischen Lagen (2) jeweils eine keramische Matrix sowie in die keramische Matrix eingebettete keramische Fasern, die zumindest teilweise mit mindestens einer anorganischen Gleitbeschichtung beschichtet sind, umfassen und eine Porosität von maximal 30 Vol.-% aufweisen.

2. Mehrlagiger Werkstoffverbund nach dem vorhergehenden Anspruch, **dadurch gekennzeichnet, dass**
- die keramische Matrix und/oder die keramischen Fasern mindestens eine Oxidkeramik enthält/enthalten oder daraus besteht/bestehen, welche vorzugsweise ausgewählt ist aus der Gruppe bestehend aus Al₂O₃-Keramiken, Mullit-Keramiken, ZrO₂-Keramiken sowie Mischungen und Kombinationen hiervon, und/oder
- die anorganischen Gleitschichtlagen (4) und/oder die mindestens eine anorganische Gleitbeschichtung mindestens ein Material enthält/enthalten oder daraus besteht/bestehen, welches innerhalb seiner Kristallstruktur eine Schichtstruktur aufweist, bei welcher Bindungskräfte zwischen den Atomen in einer Schichtebene größer sind als Bindungskräfte zwischen den Schichtebenen, wobei das mindestens eine Material vorzugsweise ausgewählt ist aus der Gruppe bestehend aus Schichtsilicaten, Bornitrid, Graphit, sowie Mischungen und Kombinationen hiervon, und/oder
- zwischen jeweils zwei der keramischen Lagen (2) immer eine oder zwei der Gleitschichtlagen (4) angeordnet ist/sind.

3. Mehrlagiger Werkstoffverbund nach einem der vorhergehenden Ansprüche, **dadurch gekennzeichnet, dass** der mehrlagige Werkstoffverbund zusätzlich Metall-Lagen (5) umfasst, wobei vorzugsweise
- die Metall-Lagen (5) jeweils mindestens ein Material enthalten oder daraus bestehen, welches ausgewählt ist aus der Gruppe bestehend aus Titan, Titan-Legierungen, Aluminium, Aluminium-Legierungen, Kupfer, Eisen-Legierungen, Nickel-Legierungen, Cobalt-Legierungen, sowie Mischungen, Legierungen und Kombinationen hiervon, und/oder
- zwischen jeweils zwei der keramischen Lagen (2) immer eine der Metall-Lagen (5) angeordnet ist, wobei besonders bevorzugt zwischen jeweils einer der keramischen Lagen (2) und einer der Metall-Lagen (5) immer eine der anorganischen Gleitschichtlagen (4) angeordnet ist, und/oder
- die Metall-Lagen (5) jeweils eine Dicke von 0,1 mm bis 1 mm, bevorzugt von 0,1 mm bis 0,5 mm, aufweisen.

4. Mehrlagiger Werkstoffverbund nach einem der vorhergehenden Ansprüche, **dadurch gekennzeichnet, dass** der mehrlagige Werkstoffverbund zusätzlich Polymer-Lagen (6) umfasst, wobei vorzugsweise
- die Polymer-Lagen (6) jeweils mindestens ein Polymer enthalten oder daraus bestehen, welches ausgewählt ist aus der Gruppe bestehend aus Polyimiden, High-Density-Polyethylen, sowie Mischungen und Kombinationen hiervon, und/oder,
- zwischen jeweils zwei der keramischen Lagen (2) immer eine der Polymer-Lagen (6) angeordnet ist, wobei besonders bevorzugt jeweils zwischen zwei der keramischen Lagen (2) eine der Polymer-Lagen (6) und eine oder zwei der anorganischen Gleitschichtlagen (4) angeordnet sind, und/oder
- die Polymer-Lagen (6) jeweils Borcarbid-Partikel enthalten, und/oder
- die Polymer-Lagen (6) jeweils eine Dicke von 0,1 mm bis 5 mm, bevorzugt von 0,1 mm bis 1 mm, aufweisen.

5. Mehrlagiger Werkstoffverbund nach einem der vorhergehenden Ansprüche, **dadurch gekennzeichnet, dass**
- der mehrlagige Werkstoffverbund mindestens drei, bevorzugt mindestens vier, besonders bevorzugt mindestens fünf, ganz besonders bevorzugt mindestens zehn, der keramischen Lagen (2) umfasst, und/oder
- die keramischen Fasern in Form von Rovings, in Form von Bändern aus unidirektionalen Fasern und/oder in Form von Bändern mit textiler Struktur, z.B. Geweben, angeordnet sind, welche mit der mindestens einen anorganischen Gleitbeschichtung beschichtet sind, und/oder
- die keramischen Lagen (2) eine Dicke von 0,1 mm bis 10 mm, bevorzugt von 0,1 mm bis 3 mm, aufweisen, und/oder
- die anorganischen Gleitschichtlagen (4) eine Dicke von 0,1 mm bis 5 mm, bevorzugt von 0,1 mm bis 1 mm, aufweisen.

6. Bauteil umfassend mindestens einen mehrlagigen Werkstoffverbund gemäß einem der vorhergehenden Ansprüche.

7. Bauteil nach Anspruch 6, **dadurch gekennzeichnet, dass** das Bauteil ausgewählt ist aus der Gruppe bestehend aus Rohren, Rohrleitungen, Reaktorgehäusen, Reaktorbauteilen, Behältern und Behälterelementen.

8. Bauteil nach Anspruch 6 oder 7, **dadurch gekennzeichnet, dass** das Bauteil ein Behälter ist, der mindestens ein erstes Behälterelement (7) und mindestens ein um das mindestens eine erste Behälterelement (7) herum angeordnetes zweites Behälterelement (8) aufweist, wobei das mindestens eine zweite Behälterelement (8) den mindestens einen mehrlagigen Werkstoffverbund enthält oder daraus besteht,
wobei das mindestens eine erste Behälterelement (7) vorzugsweise ein Material umfasst oder daraus besteht, welches ausgewählt ist aus der Gruppe bestehend aus Metallen, vorzugsweise Eisen, Stahl, sowie Mischungen, Legierungen und Kombinationen hiervon.

9. Bauteil nach Anspruch 8, **dadurch gekennzeichnet, dass** zwischen dem mindestens einen ersten Behälterelement (7) und dem mindestens einen zweiten Behälterelement (9) mindestens eine Zwischenschicht (8) angeordnet ist, wobei die mindestens eine Zwischenschicht (8) vorzugsweise
- ein Material enthält oder daraus besteht, welches ausgewählt ist aus der Gruppe bestehend aus Schwerbeton, Geopolymeren, Schwermineralien, und Mischungen hiervon, und/oder
- eine Dicke von 10 cm bis 50 cm, bevorzugt von 20 cm bis 30 cm, aufweist.

10. Verfahren zur Herstellung eines mehrlagigen Werkstoffverbunds gemäß einem der Ansprüche 1 bis 5, bei welchem mindestens zwei der Lagen des herzustellenden mehrlagigen Werkstoffverbunds jeweils unter Verwendung einer Wickeltechnik hergestellt werden.

11. Verfahren nach Anspruch 10, **dadurch gekennzeichnet, dass** die Lagen des herzustellenden mehrlagigen Werkstoffverbunds
- hergestellt werden, indem eine erste Lage des herzustellenden mehrlagigen Werkstoffverbunds auf einen Wickelkern aufgebracht und danach die weiteren Lagen des herzustellenden mehrlagigen Werkstoffverbunds nacheinander lagenweise auf den Wickelkern, auf den die erste Lage aufgebracht ist, aufgebracht werden, oder
- jeweils separat durch Aufbringen der jeweiligen Lage auf einen Wickelkern, auf den keine Lage des herzustellenden mehrlagigen Werkstoffverbunds aufgebracht ist, hergestellt werden und danach zum mehrlagigen Werkstoffverbund zusammengefügt werden.

12. Verfahren nach Anspruch 10 oder 11, **dadurch gekennzeichnet, dass**
- die keramischen Lagen (2) hergestellt werden, indem jeweils mindestens eine Lage aufgewickelt wird, die keramisches Matrixmaterial und keramische Fasern, welche zumindest teilweise mit einer anorganischen Gleitbeschichtung beschichtet sind, enthält, und die mindestens eine die keramischen Fasern und das keramische Matrixmaterial enthaltende Lage mindestens einer Wärmebehandlung oder einer Kaltaushärtung unterzogen wird, wobei vorzugsweise
∘ die mindestens eine Wärmebehandlung bei einer Temperatur von 500 °C bis 1300 °C, bevorzugt von 900 °C bis 1100 °C, und/oder über eine Dauer von 12 h bis 36 h, bevorzugt von 12 h bis 24 h, erfolgt, und/oder
∘ jeweils vor der Wärmebehandlung keramische Partikel und/oder glasige Partikel auf die mindestens eine die keramischen Fasern und das keramische Matrixmaterial enthaltende Lage, vorzugsweise mittels Sprühverfahren und/oder Siebdruck, aufgebracht werden,
und/oder
- die anorganischen Gleitschichtlagen (4) hergestellt werden, indem jeweils ein anorganische Partikel enthaltender Schlicker auf Basis eines Polymers oder Wasser als Medium aufgetragen, vorzugsweise durch Sprühen, Aufstreichen oder Tauchen aufgetragen, wird.

13. Verfahren nach einem der Ansprüche 10 bis 12 **dadurch gekennzeichnet, dass** der mehrlagige Werkstoffverbund zusätzlich
- Metall-Lagen (5) umfasst, die hergestellt werden, indem jeweils mindestens eine Lage in Form eines Metall-Bands oder einer Metall-Folie aufgewickelt wird, und/oder
- Polymer-Lagen (6) umfasst, die hergestellt werden, indem jeweils mindestens eine Lage in Form einer Polymer-Folie aufgewickelt und danach mindestens einer Wärmebehandlung unterzogen wird.

14. Verfahren zur Herstellung eines Bauteils gemäß einem der Ansprüche 6 bis 9, bei welchem zunächst ein mehrlagiger Werkstoffverbund gemäß einem der Ansprüche 1 bis 5 bereitgestellt oder ein mehrlagiger Werkstoffverbund mit einem Verfahren gemäß einem der Ansprüche 10 bis 13 hergestellt wird, und danach unter Verwendung des bereitgestellten bzw. hergestellten mehrlagigen Werkstoffverbunds das herzustellende Bauteil hergestellt wird.

15. Verwendung eines mehrlagigen Werkstoffverbunds gemäß einem der Ansprüche 1 bis 5 oder eines Bauteils gemäß einem der Ansprüche 6 bis 9
- als Behälter für den Transport und/oder die Endlagerung von radioaktiven Stoffen oder als Element (z.B. Wandung, Deckel, Bodenplatte) eines solchen Behälters,
- als Behälter für Sonderabfälle, z.B. Sonderabfälle aus der Chemie, oder als Element (z.B. Wandung, Deckel, Bodenplatte) eines solchen Behälters,
- als Behälter für Rückstände aus Verbrennungsprozessen, z.B. Schlacke, oder als Element (z.B. Wandung, Deckel, Bodenplatte) eines solchen Behälters,
- als Reaktor in der Chemietechnik oder Verfahrenstechnik, oder als Bauteil eines solchen Reaktors,
- als Rohrleitung zur Durchführung von Medien wie z.B. Säuren, Laugen oder heißen Abgasen, oder als Rohr einer solchen Rohrleitung.
